# EUROPÄISCHE PATENTSCHRIFT

(11) **EP 3 380 713 B1**
(45) Veröffentlichungstag und Bekanntmachung des Hinweises auf die Patenterteilung: **26.01.2022**
(21) Anmeldenummer: 16829063.3
(22) Anmeldetag: 28.11.2016
(51) Int. Cl.: F02M 25/12, F02M 27/04, F02D 19/06, F02D 41/00, F02D 41/18, F02B 43/10, F02D 41/20

(54) **VERFAHREN ZUM BETREIBEN EINER VERBRENNUNGSKRAFTMASCHINE MIT EINEM DER VERBRENNUNGSLUFT ZUGEFÜHRTEN, DURCH WASSERELEKTROLYSE ERZEUGTEN GASGEMISCH SOWIE ANORDNUNG UND ELETROLYSEGERÄT ZUR DURCHFÜHRUNG DES VERFAHRENS**
METHOD FOR OPERATING AN INTERNAL COMBUSTION ENGINE WITH A GAS MIXTURE SUPPLIED TO THE COMBUSTION AIR AND PRODUCED BY WATER ELECTROLYSIS, AND ASSEMBLY AND ELECTROLYSIS DEVICE FOR CARRYING OUT SAID METHOD
PROCÉDÉ PERMETTANT DE FAIRE FONCTIONNER UN MOTEUR À COMBUSTION INTERNE AVEC UN MÉLANGE GAZEUX PRODUIT PAR ÉLECTROLYSE DE L'EAU ET DÉLIVRÉ À L'AIR DE COMBUSTION, AINSI QU'ENSEMBLE ET APPAREIL D'ÉLECTROLYSE POUR LA MISE EN OEUVRE DU PROCÉDÉ

(30) Priorität: 26.11.2015 DE 102015120545
(43) Veröffentlichungstag der Anmeldung: 03.10.2018
(73) Patentinhaber: HMT Hydromotive GmbH, 10117 Berlin (DE)
(72) Erfinder: MANTHEI, Rainer, 14641 Nauen (DE); SCHNEIDER, Marcus, 85414 Kirchdorf (DE); GÖBEL, Gerhard, 10315 Berlin (DE); TÓTH, György, 8900 Zalaegerszeg (HU)
(74) Vertreter: DTS Patent- und Rechtsanwälte Schnekenbühl und Partner mbB
(86) Internationale Anmeldenummer: PCT/DE2016/100557
(87) Internationale Veröffentlichungsnummer: WO 2017/088858

(56) Entgegenhaltungen:
- WO-A1-2010/001086
- WO-A2-2010/039283
- SG-A1- 172 123
- US-A- 3 980 053
- US-A1- 2002 189 601
- US-A1- 2011 220 516

## Beschreibung

Die Erfindung betrifft ein Verfahren zum Betreiben einer Verbrennungskraftmaschine mit einem der Verbrennungsluft zugeführten, durch Elektrolyse von Wasser erzeugten Gasgemisch sowie eine Anordnung mit einem Elektrolysegerät zur Durchführung des Verfahrens.

Bei einem aus der DE 10 2009 026 374 A1 bekannten Verfahren zum Betreiben eines Verbrennungsmotors für Kraftfahrzeuge mit fossilem Kraftstoff und einem der Verbrennungsluft im Ansaugtrakt des Motors zugeführten, im Fahrzeug durch Elektrolyse von Wasser hergestellten Wasserstoff-Sauerstoff-Gemisch (Knallgas, Brownsgas) wird das Wasserstoff-Sauerstoff-Gemisch im normalen Motorbetrieb bis zum Erreichen eines vorgegebenen Speicherdrucks erzeugt und zwischengespeichert und nur bei hoher Motorleistung beim Anfahren und Beschleunigen des Fahrzeugs in den Ansaugtrakt des Motors geleitet. Die Erzeugung des Wasserstoffs erfolgt mit einem aufwändig ausgebildeten, aus einem separaten Wassertank versorgten Elektrolysegerät, das an eine zusätzliche Lichtmaschine angeschlossen ist.

Die WO 2007/091105 beschreibt die Verwendung eines im Elektrolysegerät erzeugten Wasserstoff-Sauerstoff-Gemisches bei einem mit herkömmlichen Kraftstoff betriebenen Verbrennungsmotor, wobei der Kraftstoff bei einer Laständerung kurzzeitig ganz oder teilweise durch das im Fahrzeug erzeugte Wasserstoff-Sauerstoff-Gemisch ersetzt wird. Aus der WO 2007/101329 A1 sind ein Verfahren und eine Vorrichtung zum wasserstoffunterstützten Kaltstarten eines Verbrennungsmotors bekannt. Dabei soll aus dem in einem Elektrolysegerät erzeugten Wasserstoff-Sauerstoff-Gemisch der Sauerstoff abgetrennt werden. Auch in der US 6 155 212 A1 und in der WO 2006/124805 A2 wird die zusätzliche Nutzung von im Kraftfahrzeug erzeugtem und zwischengespeichertem Wasserstoff für den Verbrennungsprozess beschrieben.

Ein aus der DE 10 2008 003 126 A1 bekanntes, über den Ansaugtrakt unmittelbar an den Verbrennungsraum einer Verbrennungskraftmaschine angeschlossenes Elektrolysegerät zur Erzeugung eines dem Kraftstoff beizumengendem Wasserstoff-Sauerstoff-Gemisch verwendet zur Verbesserung des Wirkungsgrads der Elektrolyse Kaliumhydroxid (KOH) als Elektrolyt. Das Elektrolysegerät umfasst in gleichmäßigem Abstand angeordnete Elektrodenplatten, die in den in einem Behälter befindlichen Elektrolyt eintauchen. Die beiden äußeren Platten sind an den Minus- bzw. Pluspol der Fahrzeugbatterie angeschlossen und die Anzahl der Platten wird entsprechend der von der Batterie bereitgestellten Spannung so festgelegt, dass zwischen zwei einander gegenüberliegenden Elektrodenoberflächen für die Durchführung der Elektrolyse eine Spannung von etwa zwei Volt anliegt.

Ferner ist aus der WO 2010/039283 A2 eine Vorrichtung und ein Verfahren zum Erzeugen von Energieträgern mithilfe einer Elektrolyse bekannt.

Der Erfindung liegt die Aufgabe zugrunde, ein Verfahren zum Betreiben einer Verbrennungskraftmaschine mit einem der Verbrennungsluft zugeführtem, durch Elektrolyse von Wasser erzeugten Gasgemisch sowie eine Anordnung und ein Elektrolysegerät zur Durchführung des Verfahrens so auszubilden, dass mit geringem apparativen und energetischen Aufwand sowie bei geringem Elektrolytverbrauch kontinuierlich eine einer effizienten Kraftstoffverbrennung genügende Gasmenge erzeugt und so in den Motorbrennraum geleitet wird, dass ein reduzierter Kraftstoffverbrauch bei gleichzeitig verringerter Schadstoffemission gewährleistet sind.

Erfindungsgemäß wird die Aufgabe mit einem Verfahren gemäß den Merkmalen des Patentanspruchs 1 sowie einer Anordnung gemäß den Merkmalen des Patentanspruchs 8 gelöst.

Zweckmäßige und vorteilhafte Weiterbildungen der Erfindung sind Gegenstand der Unteransprüche.

Die Aufgabe der Erfindung wird insbesondere gelöst durch ein Verfahren zum Betreiben einer Verbrennungskraftmaschine mit einem dem fossilen Kraftstoff im Motorverbrennungsraum mit der Verbrennungsluft zusätzlich zugeführten, durch Elektrolyse von Wasser erzeugten Gasgemisch, wobei die entsprechend dem jeweiligen Motorbetrieb in den Ansaugtrakt des Motors gesaugte Luftmenge gemessen wird und je Volumeneinheit an jeweils angesaugter Verbrennungsluft immer eine gleiche, lediglich als Additiv fungierende begrenzte Menge eines mit einem pulsierenden Strom betriebenen Elektrolysegerät erzeugten, energieangereicherte, gasförmige Wassermoleküle enthaltenden Brownsgases unmittelbar, das heißt ohne Zwischenspeicherung der Verbrennungsluft zugeführt wird, wobei der prozentuale Anteil der im Verbrennungsprozess im Kraftstoff vorhandenen Gasmoleküle derart begrenzt ist, dass die im Kraftstoff-Luft-Gemisch gleichmäßig verteilten energieangereicherten, gasförmigen Wassermoleküle nur als den Kraftstoff zündende Start- oder Zündkeime für eine früh einsetzende und lang anhaltende intensive und vollständige Verbrennung dienen.

Ein durch Elektrolyse von Wasser erzeugtes Gasgemisch wird als Brownsgas bezeichnet. Es kann neben Wasserstoff und Sauerstoff und Wassermolekülen auch Nebenprodukte wie Ozon und Wasserstoffperoxid enthalten. Die nicht aufgetrennten Wassermoleküle sind unmittelbar nach der Wasserelektrolyse noch energieangereichert und bilden mit abweichender räumlicher Ausrichtung ein Isomer des Wassermoleküls. Sie werden auch als energetisch aufgeladenes Hydroplasma bezeichnet. Diese energieangereicherten Wassermoleküle bzw. Wasserisomere sind nur begrenzt stabil und werden beispielsweise bei Durchleitung des Gases durch ein Wasserbad oder bei Lagerung zu gewöhnlichen Wassermolekülen. Bevorzugt wird das gesamte durch Elektrolyse von Wasser erzeugte Gasgemisch der Verbrennungsluft zugeführt. Dieses Gasgemisch umfasst insbesondere auch die energieangereicherten Wassermoleküle. Dies wird bevorzugt dadurch erreicht, dass dieses Gasgemisch der Verbrennungsluft ohne Zwischenspeicherung zugeführt wird. Dadurch wird der Anteil der energieangereicherten Wassermoleküle, d.h. des energetisch aufgeladenen Hydroplasmas, besonders hoch gehalten. Der Anteil der energieangereicherten Wassermoleküle in dem durch Elektrolyse von Wasser erzeugten Gasgemischs sind dabei bevorzugt mehr als ein Fünftel, bevorzugt mehr als ein Viertel, insbesondere bevorzugt mehr als ein Drittel.

Das Gasgemisch wird der Verbrennungsluft unmittelbar zugeführt. Insbesondere wird das Gasgemisch nicht durch ein Wasserbad geleitet oder länger als 10 s, bevorzugt nicht länger als 20 s, besonders bevorzugt nicht länger als 60 s, insbesondere nicht länger als 180 s, besonders bevorzugt nicht länger als 600 s nach Entstehung zwischengespeichert. Damit wird das Gasgemisch der Verbrennungsluft unmittelbar nach Entstehung des Gasgemisches durch Wasserelektrolyse zugeführt.

Beim Betrieb einer Verbrennungskraftmaschine mit einem dem fossilen Kraftstoff im Motorverbrennungsraum zusätzlich zugeführten, von einem der Verbrennungskraftmaschine zugeordneten Elektrolysegerät erzeugten und in die Verbrennungsluft eingebrachten Gasgemisch besteht der Kern der Erfindung darin, dass die entsprechend dem jeweiligen Motorbetrieb bzw. der Motorleistung; zum Beispiel im Leerlauf, beim Beschleunigen usw., in den Ansaugtrakt des Motors gesaugte Luftmenge gemessen wird und je Volumeneinheit an jeweils angesaugter Verbrennungsluft immer eine gleiche, lediglich als Additiv fungierende, begrenzte Menge eines mit dem Elektrolysegerät mit einem pulsierenden Strom erzeugten, Wasserstoff, Sauerstoff und energieangereicherte gasförmige Wassermoleküle enthaltenden Brownsgases ohne Zwischenspeicherung. das heißt noch im Zustand des Entstehens der energiereichen und zündfreudigen, aber nur kurzzeitig beständigen gasförmigen Wassermoleküle (auch als lineare Wasserisomere bezeichnet) der Verbrennungsluft zugeführt wird. Dabei ist der prozentuale Anteil des im Verbrennungsprozess im Kraftstoff vorhandenen, elektrolytisch erzeugten Gasgemisches derart begrenzt, dass die im Kraftstoff-Luft-Gemisch im Motorverbrennungsraum verteilten Wasserstoffmoleküle nur unwesentlich als zusätzlicher Kraftstoff wirken, sondern allein die energieangereicherten, gasförmigen Wassermoleküle im Brownsgas als den Kraftstoff schnell und explosionsartig zündende Start- oder Zündkeime für eine früher einsetzende und lang anhaltende intensive und vollständige Verbrennung dienen.

Der fossile Kraftstoff (zum Beispiel Diesel oder Benzin) wird allein aufgrund der nur als Zündkeimlinge wirkenden energieangereicherten gasförmigen Wassermoleküle im Brownsgas effizienter genutzt, so dass die Motorleistung verbessert und der Kraftstoffverbrauch und mithin der Schadstoffausstoß gesenkt werden kann. Darüber hinaus wird die Abgastemperatur (um -8 bis -10%) und damit die Stickoxid- und Kohlendioxid-Emission weiter reduziert. Der für die kontinuierliche Bereitstellung des Brownsgases durch die erfindungsgemäß durchgeführte Elektrolyse erforderliche apparative und energetische Aufwand ist wegen der in Abhängigkeit von der Ansaugluftmenge kontrollierten Erzeugung einer zudem begrenzten Gasmenge und wegen der durch den pulsierenden Strom erhöhten Gasproduktion im Elektrolysegerät gering. Der Stromverbrauch für die Elektrolyse wird derart minimiert, dass die erforderliche elektrische Energie - ohne zusätzliche oder eine größere Lichtmaschine - allein von der Fahrzeugbatterie geliefert werden kann. Der mit 0,05 ‰ bis 0,5 ‰ , bevorzugt von 0,05 ‰ bis 0,2 ‰ Promille pro Liter Ansaugluft äußerst geringe Braungasbedarf ist zudem insofern vorteilhaft, als die erforderliche Gasmenge mit einem Elektrolysegerät von geringer Baugröße ohne Zwischenspeicherung ständig zur Verfügung gestellt werden kann. Der konkrete Bedarf ist abhängig von der Größe des Hubraums, der Zylinderzahl, der Drehzahl und der Last. Bezogen auf die energieangereicherten, gasförmigen Wassermoleküle (dem energetisch aufgeladenen Hydroplasma) als Bestandteil vom Brownsgas liegt der Anteil bevorzugt bei 0,015 ‰ bis 0,06 ‰ pro Liter Ansaugluft,

In weiterer Ausbildung der Erfindung sind die am Elektrolysegerät wirkenden Stromimpulse rechteck- oder trapezförmig geformt.

In vorteilhafter Weiterbildung der Erfindung werden die Stromimpulse zur Einflussnahme auf die erzeugte Brownsgasmenge und insbesondere den darin enthaltenen Anteil an energieangereicherten, gasförmigen Wassermolekülen kontinuierlich oder in Intervallen sowie mit unterschiedlicher Amplitude erzeugt. Die Gasausbeute kann darüber hinaus durch die Wahl des Flankenwinkels der Stromimpulslänge beeinflusst werden.

In weiterer Ausbildung der Erfindung werden die Stromimpulse in Abhängigkeit von der Elektrolyttemperatur und der Elektrolytkonzentration sowie der Plattengeometrie und dem Plattenabstand derart gesteuert, dass das aus Elektrodenplatten und Elektrolyt bestehende System in Resonanz betrieben wird. Das führt zu einer Umspülung und schnelleren Gasbläschen-Ablösung der Elektrodenplatten und zu einer schnellen Ablösung der Gasbläschen und somit auch zu einer Erhöhung der Gasausbeute. Bevorzugt wird eine Frequenz von mehr als 1000 Hz gewählt, besonders bevorzugt von mehr als 3.000 Hz, besonders bevorzugt von mehr al 10 kHz, insbesondere bevorzugt von mehr als 25 kHz, ganz besonders bevorzugt von mehr als 50 kHz. Bevorzugt wird eine weitere Frequenz überlagert, die im Bereich von 43 kHz und ihren Harmonischen (n = 1 bis 5) liegt. Hierdurch kann die Ausbeute der gebildeten Isomere erhöht werden.

Gemäß einem weiteren wichtigen Merkmal der Erfindung wird die Menge des im Elektrolysegerät erzeugten Brownsgases in Abhängigkeit vom jeweiligen Motorbetrieb auf der Grundlage der dem Ansaugtrakt zugeführten, von einem Luftmassenmesser erfassten Luftmenge in Verbindung mit der von einem Durchflussmengenmesser erfassten, vom Elektrolysegerät tatsächlich erzeugten Brownsgasmenge gesteuert. Das heißt, es wird im Wesentlichen nur so viel Brownsgas im Elektrolysegerät erzeugt, wie im jeweiligen Motorbetrieb gerade benötigt wird, so dass der Stromverbrauch gering ist und die Kapazität der Fahrzeugbatterie nicht mehr als erforderlich genutzt wird.

In weiterer Ausbildung der Erfindung werden die energieangereicherten Wassermoleküle, die in sogenannten in Rydberg Cluster als ionisiertes Gas gebundenen werden, als Bestandteil des Brownsgases in seiner Eigenschaft als elektrisch leitfähig und auf elektromagnetische Felder ansprechbar, genutzt. Diese besondere Eigenschaft des Brownsgases ermöglicht bevorzugt eine weitere energetische Aufladung der linearen energieangereicherten Wassermoleküle nach dem magneto-hydrodynamischen Prinzip. Bei der Durchleitung des Brownsgases durch ein elektrostatisches Feld (Magnetische Feldenergie) wird eine zusätzliche Oberflächenladung (Induktionsladung) erzeugt. Die damit einhergehende Ladungstrennung des Ionenstromes führt zu einer Umwandlung von thermischer- und Bewegungsenergie durch die Spannungszunahme in elektrische Feldenergie, es entsteht ein Niedertemperaturplasma in Form des energetisch aufgeladenes Hydroplasma, was somit deutlich energiereicher ist.

Die Anordnung zur Durchführung des Verfahren, die zur Zuführung einer an den jeweiligen Motorbetrieb angepassten Luftmenge eine von einem Luftfilterkasten ausgehende, mit dem Motorverbrennungsraum der Verbrennungskraftmaschine verbundene Luftzufuhrleitung umfasst, ist erfindungsgemäß dadurch gekennzeichnet, dass eine an ein von einer Fahrzeugbatterie versorgtes Elektrolysegerät angeschlossene Gaszufuhrleitung unmittelbar in die Luftzufuhrleitung mündet, und in die Luftzufuhrleitung vor der Mündung der Gaszufuhrleitung ein Luftmassenmesser zur Erfassung des in Abhängigkeit vom jeweiligen Motorbetrieb angesaugten Luftvolumens und in die Gaszufuhrleitung in Strömungsrichtung zunächst ein Durchflussmengenmesser zur Erfassung der tatsächlich erzeugten Gasmenge und ein Drosselventil zur endgültigen Einstellung des an die geförderte Luftmenge angepassten Gasvolumens eingebunden sind, die jeweils an ein dem Elektrolysegerät zugeordnetes erstes Steuergerät zur Regelung der Gaserzeugung auf der Grundlage der angesaugten Luftmenge und der erfassten Gasmenge mithilfe eines von einem Modulator kontinuierlich oder in Intervallen umgeformten, in Frequenz, Amplitude, Flankenanstiegswinkel und Zeitdauer variablen pulsierenden Stroms angeschlossen sind.

In weiterer Ausbildung der erfindungsgemäßen Anordnung sind in die Gaszufuhrleitung ein Wasserscheider, ein Wasserdetektor und ein Gasfilter zur Gasreinigung und eine aus einem gasdurchlässigen keramischen Material bestehende Rückbrandsicherung zur Vermeidung eines Flammenrückschlags in das Elektrolysegerät eingebunden. Bevorzugt durchströmt das Brownsgas mit seinen Bestandteilen vor der Einleitung in die Luftzufuhrleitung ein an der Gaszufuhrleitung anliegendes Magnetfeld (elektrostatisches Feld), wodurch eine zusätzliche Oberflächenladung respektive Induktionsladung der linearen Wasserisomere erzeugt und das energetisch aufgeladene Hydroplasma mit deutlich höherer energetischer Ladung entsteht.

In Ausgestaltung der Erfindung ist das erste Steuergerät über ein zweites Steuergerät mit einem der Verbrennungskraftmaschine zugeordneten Hauptsteuergerät verbunden. Das erste und zweie Steuergerät können auch in das Hauptsteuergerät integriert sein.

In weiterer Ausgestaltung der Erfindung mündet die Gaszufuhrleitung zur Verwirbelung und gleichmäßigen Verteilung der im Gasstrom enthaltenen gasförmigen Wassermoleküle in der Ansaugluft über eine stromab des Luftmassenmessers angeordnete Venturidüse in die Luftzufuhrleitung. Damit erfolgt bevorzugt nicht nur eine Druckregulierung und Oberflächenvergrößerung sondern es wird bereits eine homogene Vermischung des Volumenstroms des energetisch aufgeladenen Hydroplasmas mit der angesaugten Luft gewährleistet.

In vorteilhafter Weiterbildung der Erfindung weist das Elektrolysegerät mehrere in einem mit einem Elektrolyt gefüllten Gehäuse im Abstand parallel angeordnete, mit Durchbrüchen versehene Elektrodenplatten auf. Die beiden äußeren Elektrodenplatten oder alternativ eine mittige Elektrodenplatte und die beiden äußeren Elektrodenplatten sind über das erste Steuergerät mit dem Plus- bzw. Minuspol der Fahrzeugbatterie verbunden. Ein oberhalb der Elektrodenplatten durch eine Gehäusedecke begrenzter, das erzeugte Brownsgas kurzzeitig aufnehmender Gassammelraum ist über einen auf einen Gasauslassstutzen abdichtend aufsteckbaren und bei einem bestimmten Überdruck (ca. > 0,1 bar ) im Gassammelraum selbsttätig öffnenden Deckel mit einem innen liegenden, einen Filter aufnehmenden Rohrstück und einem Gasanschlussstutzen an die zur Luftzufuhrleitung führende Gaszufuhrleitung anschließbar. Das kleine, unter einem geringen Druck stehende Gasreservoir oberhalb der Elektrodenplatten ermöglicht eine rasche Zuführung der nur kurzzeitig beständigen energiereichen, gasförmigen Wassermoleküle zur Verbrennungsluft.

In Ausgestaltung der Erfindung weist die Gehäusedecke des Elektrolysegerätes einen bis auf die maximale Elektrolytfüllhöhe im Gehäuse abgesenkten Abschnitt mit einer durch einen Schraubdeckel verschließbaren Einfüllöffnung auf. Ein Überfüllen des Elektrolysegerätes oder eine zu starke Verdünnung des Elektrolyten ist dadurch ausgeschlossen und oberhalb des Elektrolyten steht immer ein bestimmtes Gasreservoir zur Verfügung.

In weiterer Ausgestaltung der Erfindung sind die Elektrodenplatten in am Boden und zwei gegenüberliegenden Seitenwänden des Gehäuses sowie im Bereich der Elektrodenoberkante vorgesehenen Nuten fixiert.

In vorteilhafter Weiterbildung der Erfindung umfasst das Elektrolysegerät zur Überwachung des Elektrolyten einen Dichtemesser, einen Füllstandsmesser und einen Temperatursensor sowie ein Überdruckventil.

In Ausgestaltung der Erfindung weisen die Elektrodenplatten eine gegenüber ihrer Höhe deutlich größere Breite auf. Dadurch ist eine ausreichend große Elektrodenfläche über einen langen Zeitraum mit Elektrolyt bedeckt und somit ohne Nachfüllen von Elektrolyt eine lange Betriebsdauer des Elektrolysegerätes gewährleistet.

Die Elektrodenplattendicke beträgt etwa einen Millimeter und der Elektrodenplattenabstand liegt zwischen 1,5 und 10,5 Millimetern. Der im Elektrolysegerät befindliche Elektrolyt ist vorzugsweise eine 3,5 bis 5,0-prozentige Kalilauge Lösung,

In weiterer Ausgestaltung der Erfindung weist der Elektrolyt zur Gefrierpunktabsenkung im Winterbetrieb eine erhöhte Konzentration auf und/oder enthält bis max. 10% Ethylenglycol als Gefrierschutzmittel.

Ein Ausführungsbeispiel der Erfindung wird anhand der Zeichnung, in der
- Fig. 1: eine Anordnung zum Betreiben einer Verbrennungskraftmaschine mit fossilem Kraftstoff und einem der Verbrennungsluft aus einem Elektrolyseprozess zugeführten Gasgemisch aus Wasserstoff, Sauerstoff und gasförmigem Wasser (Brownsgas); und
- Fig. 2: ein Elektrolysegerät zur Erzeugung von Brownsgas (HHO) mit einer im Detail dargestellten Plattenanordnung; und
- Fig. 3: eine weitere Ausführungsform der Plattenanordnung im Elektrolysegerät zeigt, näher erläutert.

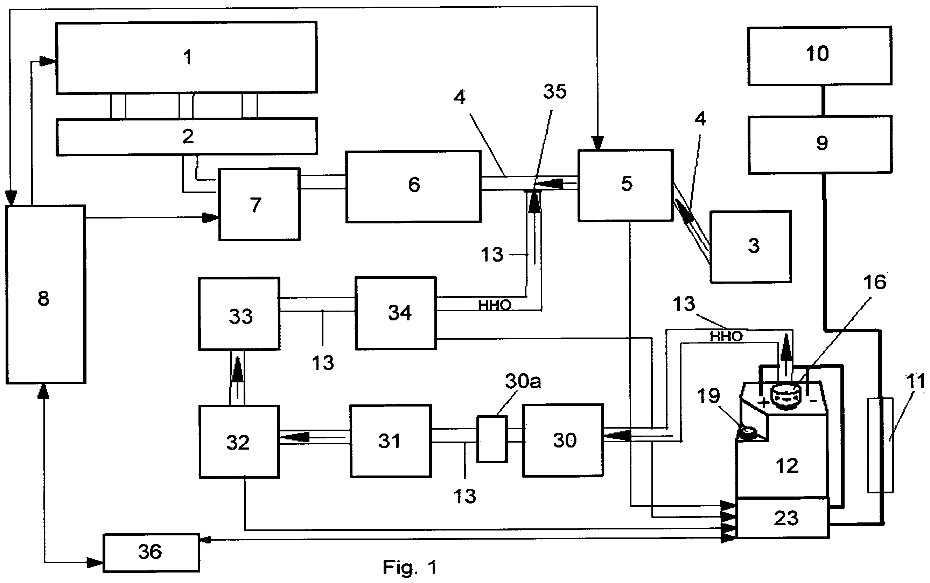

Die in Fig. 1 dargestellte Anordnung umfasst als herkömmliche Bestandteile eine hier nur durch den Motorverbrennungsraum 1 wiedergegebene Verbrennungskraftmaschine (beispielsweise für einen Personenkraftwagen), deren einzelne Zylinder über ein Saugrohr 2 mit dem Ansaugtrakt für die aufgrund der Kolbenbewegung angesaugte Verbrennungsluft verbunden sind. Der Ansaugtrakt besteht im Wesentlichen aus einer von einem Luftfilterkasten 3 ausgehenden Luftzufuhrleitung 4, in die ein Luftmassenmesser 5 zur Erfassung des in Abhängigkeit vom Motorbetrieb jeweils angesaugten Luftvolumens sowie ein Turbolader 6 zur Verdichtung und eine Drosselklappe 7 zur Regelung der dem Saugrohr 2 zugeführten Luftmenge entsprechend der jeweils geforderten Motorleistung eingebunden sind. Über ein der Verbrennungskraftmaschine zugeordnetes, an den Luftmassenmesser 5 angeschlossenes Hauptsteuergerät 8 (OBD-Steuergerät) wird die dem Motorverbrennungsraum 1 zugeführte Kraftstoffmenge geregelt.

An die Verbrennungskraftmaschine ist in üblicher Weise eine mit der Fahrzeugbatterie 9 verbundene Lichtmaschine 10 zur Stromversorgung der für den Betrieb der Verbrennungskraftmaschine erforderlichen elektrischen Geräte und sonstiger Stromverbraucher gekoppelt. Mit dem von der Fahrzeugbatterie 9 über eine Sicherung 11 bereitgestellten Strom wird auch das nachfolgend beschriebene Elektrolysegerät 12 angetrieben, mit dem während des Betriebs der Verbrennungskraftmaschine durch elektrolytische Wasserzersetzung ständig eine definierte Menge von Brownsgas (HHO) und insbesondere des in dem Wasserstoff-Sauerstoff-Gasgemisch anfangs enthaltenen energieangereicherten gasförmigen Wassers (H-O-H) erzeugt wird und über eine Gaszufuhrleitung 13 in den zwischen dem Luftmassenmesser 5 und dem Turbolader 6 befindlichen Teil der Luftzufuhrleitung 4 eingespeist wird.

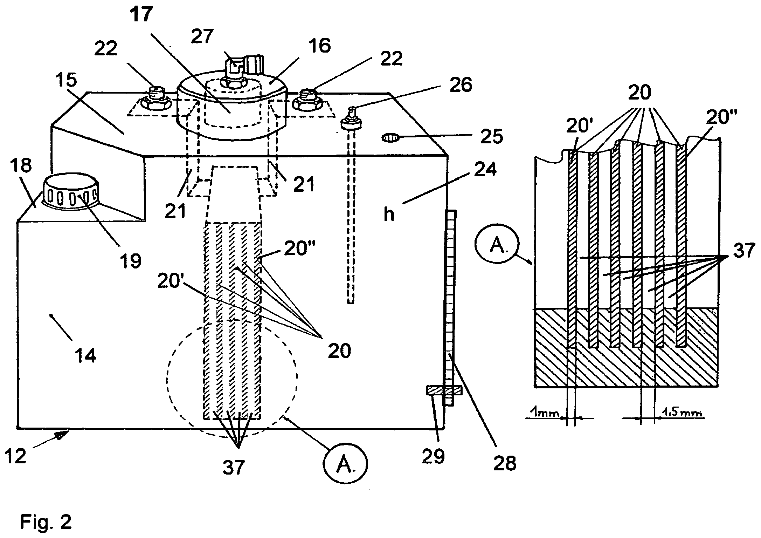

Das in Fig. 2 dargestellte Elektrolysegerät 12 umfasst ein aus Kunststoff bestehendes geschlossenes Gehäuse 14 mit einem von der Gehäusedecke 15 ausgehenden Gasauslassstutzen, auf den ein mittels O-Ring (jeweils nicht dargestellt) abdichtend gehaltener Deckel 16 aufgesteckt ist. Von der horizontalen Innenseite des Deckels 16 geht ein sich in den Gasauslassstutzen erstreckendes Rohrstück 17 zur Aufnahme eines Filters (nicht dargestellt) aus, mit dem von dem bei der Elektrolyse erzeugten Gas mitgerissene Salzpartikel sowie Wasser und Wasserdampf zurückgehalten werden sollen. Ein an dem Deckel 16 oberhalb des Filters angebrachter Gasanschlussstutzen 27 ist mit der in Fig. 1 dargestellten Gaszufuhrleitung 13 verbunden. Der Deckel 16 kann zur Reinigung des Filters auf einfache Art manuell von dem an die Gehäusedecke 15 angeformten Gasauslassstutzen abgezogen werden. Der Öffnungswiderstand des Deckels 16 ist auf einen geringen Betriebsdruck von 0.1 bar begrenzt.

In einem nach unten versetzten Abschnitt 18 der Gehäusedecke 15, das heißt in einer gegenüber der Gehäusedecke und der in dieser ausgebildeten Gasauslassöffnung abgesenkten Ebene befindet sich eine mit einem Schraubdeckel 19 verschließbare Einfüllöffnung (nicht dargestellt) für den maximal bis auf das Niveau des abgesenkten Abschnitts 18 der Gehäusedecke 15 in das Gehäuse 14 einzubringenden Elektrolyten, hier vorzugsweise eine 3,5- bis 5,0-prozentige Kalilauge. Aufgrund der dadurch begrenzten maximalen Füllhöhe h wird eine bestimmte Mindesthöhe des Gasreservoirs im Gassammelraum 24 Elektrolysegerät 12 festgelegt und zudem verhindert, dass Elektrolyt versehentlich in die zum Ansaugtrakt des Motors führende Gaszufuhrleitung 13 gelangt.

In den Elektrolyt tauchen - am Boden und an zwei gegenüberliegenden Seitenwänden des Gehäuses 14 sowie im Bereich der Plattenoberkanten in einem Abstand von etwa 1 mm in Nuten (nicht dargestellt) fixierte - hier 1 mm dicke Elektrodenplatten 20 ein. Die Elektrodenplatten 20 können so zur Reinigung oder zum Austauschen einfach montiert und demontiert werden. Die Elektrodenplatten 20 weisen jeweils eine oder mehrere Bohrungen (nicht dargestellt) auf, so dass die zwischen diesen gebildeten Kammern 37 miteinander verbunden sind und von dem Elektrolyt durchströmt werden können. Die beiden äußeren Elektrodenplatten 20', 20" sind über jeweils eine Verbindungsleitung 21 und an der Gehäusedecke 15 angebrachte Anschlussklemmen 22 mit dem Minus- bzw. Pluspol der Fahrzeugbatterie 9 verbunden. Entsprechend der Batteriespannung (z. B. 12 - 15 Volt bei PKW) und der Anzahl der Elektrodenplatten 20 liegt in den zwischen diesen gebildeten Kammern 37 jeweils eine für den Elektrolyseprozess optimale Spannung von ca. zwei Volt an. Vorzugweise ist die Breite der Elektrodenplatten 20 größer als deren Höhe, so dass die Elektrodenplatten 20 - bei einem sich allmählich verbrauchenden Elektrolyten - über einen langen Zeitraum in ausreichender Höhe in den Elektrolyt eintauchen und ohne ständiges Nachfüllen von Elektrolyt eine ausreichende Menge an Brownsgas erzeugt wird. Ein Liter Elektrolyt reicht etwa 50 Betriebsstunden oder bis zu 5000 Kilometer bei einem 3l Dieselmotor.

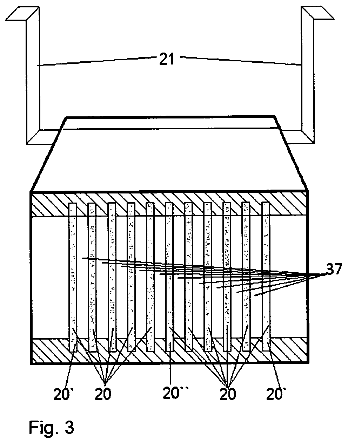

Wie Fig. 3 zeigt, ist es aber auch denkbar, dass eine mittig angeordnete Elektrodenplatte 20" mit dem Pluspol der Fahrzeugbatterie verbunden ist und die beiden äußeren Elektrodenplatten 20' an den Minuspol angeschlossen sind, um mit der mittigen Anode und zwei äußeren Kathoden und den zwischen diesen angeordneten Elektrodenplatten in einer kompakten Ausführung des Elektrolysegerätes eine größere Elektrodenfläche und damit eine hohe Gaserzeugungsrate zu gewährleisten.

Wie Fig. 1 zeigt, ist an das Elektrolysegerät 12 ein erstes Steuergerät 23 mit einem integrierten Modulator (nicht dargestellt) zur Umwandlung des von der Fahrzeugbatterie 9 gelieferten Gleichstroms in - im Wesentlichen rechteckförmige - Stromimpulse angeschlossen, die das aus den Elektrodenplatten 20 und dem zwischen diesen befindlichen Elektrolyten bestehende System zum Schwingen bringen, so dass die bei der Elektrolyse gebildeten Wasserstoff-, Sauerstoff- und Wassergasbläschen (Brownsgas) durch die Bewegung des Gesamtsystems besser von der Elektrodenplatten 20 abgelöst werden und somit immer eine maximale Elektrodenfläche zur Erzeugung eines hohen Brownsgasvolumens als Additiv für das Kraftstoff-Luft-Gemisch im Motorverbrennungsraum 1 zur Verfügung steht. Aufgrund der durch den pulsierenden Strom in Schwingung versetzten Wassermoleküle wird - neben der Elektrolyse von Wasser zu Wasserstoff und Sauerstoff - zudem ein größerer Teil der im Elektrolyten enthaltenen Wassermoleküle zu linearen Wasserisomeren (H-O-H) aufgespreizt, d.h. die Entstehung von energieangereichertem, gasförmigem Wassermolekülen als Bestandteil von Brownsgas angeregt und unterstützt, so dass für den Verbrennungsprozess ein nur in geringer Menge erforderliches Additiv, jedoch mit deutlich höherer Energie als herkömmliches Knallgas, zur Verfügung steht. Der pulsierende Strom und die dadurch im Elektrolysesystem erzeugten Schwingungen können ständig oder in gleich oder unterschiedlich langen Intervallen sowie in unterschiedlicher Frequenz und Amplitude (Stromstärke) erzeugt werden, um auf diese Art im Motorbetrieb auf das erzeugte Gasvolumen und die Struktur des Gases Einfluss nehmen zu können und insbesondere das energiereiche Brownsgas bereitzustellen. Aufgrund der durch die Vibration des Elektrolysesystems erhöhten Gaserzeugung kann der Stromverbrauch gesenkt werden und dennoch eine hohe Gasausbeute erreicht werden.

Das Elektrolysegerät 12 ist mit einem in dem über dem jeweiligen Elektrolytniveau befindlichen Gassammelraum 24 angeordneten, in Fig. 1 nur schematisch dargestellten Überdruckventil 25 als zusätzliche Sicherheit (Öffnung bei einem Betriebsdruck im Gassammelraum -hier >0,1 bar) ausgerüstet.

Innerhalb eines Gasdruckes =< 0,1 bar ist eine unmittelbare Weiterleitung des erzeugten Gases und insbesondere der nur kurzzeitig beständigen energiereichen gasförmigen Wassermoleküle noch im Zustand des Entstehens in den Ansaugtrakt gewährleistet. Eine weitere Sicherheit gegen das Auftreten eines unzulässig hohen Drucks im Elektrolysegerät 12 bietet der am Gehäuse 14 lediglich durch eine Steckverbindung gehaltene Deckel 16, der bei einem zu hohen Gasdruck von dem an die Gehäusedecke 15 angeformten Gasauslassstutzen abgestreift wird. Mit einem in den Elektrolyt ragenden Dichtemesser 26 kann die Konzentration des Kaliumhydroxids in der wässrigen Elektrolytlösung überwacht werden werden, während mit einem Füllstandmesser 28 die Füllhöhe im Gehäuse 14 ermittelt werden kann und die Temperatur des Elektrolyten mit einem Temperatursensor 29 angezeigt wird. Mit einer Arbeitstemperatur von 60 bis 65 °C und vorzugsweise einem KOH-Anteil von 3,5 bis 5,0 % wird in Verbindung mit dem am Elektrolysegerät 12 anliegenden gepulsten Strom, und zwar bei einer gegenüber herkömmlichen, bei Verbrennungskraftmaschinen eingesetzten Elektrolysegeräten deutlich verringerten Stromstärke, eine der Wirkung des Brownsgasgemisches lediglich als Additiv genügende Gasmenge erzeugt. Die erforderliche Plattenfläche und der Elektrolytverbrauch sind vergleichsweise gering. Das Elektrolysegerät kann daher klein und kompakt ausgebildet sein und erfordert einen geringen Wartungsaufwand. Aufgrund des geringen Stromverbrauchs kann die Stromversorgung des Elektrolysegerätes über die an die Fahrzeugbatterie angeschlossene Lichtmaschine des Fahrzeugs erfolgen. Sobald der Füllstand oder die KOH-Konzentration oder die Temperatur des Elektrolyten außerhalb eines vorgegebenen Bereiches liegen, wird dieser Zustand durch ein vom ersten Steuergerät initiiertes Signal angezeigt.

Gemäß Fig. 1 sind stromab des Elektrolysegerätes 12 in die an die Luftzufuhrleitung 4 angeschlossene Gaszufuhrleitung 13 zunächst ein Wasserscheider 30, ein Wasserdetektor 30a und ein Gasfilter 31 zur Abscheidung von im Brownsgas noch enthaltenem Wasserdampf und zur Abtrennung von Salzpartikeln eingebunden. Über ein Durchflussmengenmesser 32, eine Rückbrandsicherung 33 und ein Drosselventil 34 mit bevorzugt einem danach anliegenden elektrostatischen Feld (Magnetfeld) gelangt das Gasgemisch schließlich zu einer stromab des Luftmassenmessers 5 und vor dem Turbolader 6 unmittelbar in die Luftzufuhrleitung 4 mündenden Venturidüse 35. Das mit der Verbrennungskraftmaschine sowie der Drosselklappe 7 und dem Luftmassenmesser 5 verbundene Hauptsteuergerät 8 ist über ein zweites Steuergerät 36 an das erste, dem Elektrolysegerät 12 zugeordnete Steuergerät 23 angeschlossen, das wiederum mit dem Durchflussmengenmesser 32 und dem Luftmassenmesser 5 sowie dem Drosselventil 34 elektrisch verbunden ist.

Die Rückbrandsicherung 33 umfasst eine aus einem gesinterten Material bestehende poröse Struktur, die ein Zurückschlagen einer durch die Verbrennung im Motorraum erzeugten Flamme und eine dadurch bewirkte Entzündung des im Gasreservoir des Elektrolysegerätes gespeicherten Gasgemisches verhindert. Das mit dem ersten Steuergerät 23 verbundene Drosselventil 34 sorgt dafür, dass bei geringer Motorleistung, zum Beispiel im Leerlauf, und entsprechend geringer Gasabnahme aufgrund des geringen Unterdrucks vor dem Turbolader 6, nicht eine zu hohe Gasmenge in den Ansaugtrakt gelangt. Das bevorzugt anliegende elektrostatische Feld (Magnetfeld) erhöht die Oberflächenladung (Induktiönsladung) der bereits energiegeladenen linenaren Wasserisomere, wodurch zusätzliche Feldenergie und ein energetisch aufgeladenes Hydroplasma entsteht. Schließlich besteht die Aufgabe der Venturidüse 35 darin, das in die Luftzuführungsleitung 4 eingebrachte Brownsgas in der über den Luftfilterkasten 3 angesaugten Luft intensiv zu verwirbeln und sehr fein und gleichmäßig zu verteilen.

Eine wichtige Funktion in dem Gesamtsystem hat zudem der in die Gaszufuhrleitung 13 stromab vom Wasserscheider 30 und Gasfilter31 eingebundene Durchflussmengenmesser 32, der die im Elektrolysegerät 12 erzeugte Gasmenge misst und das Messergebnis dem Steuergerät 23 des Elektrolysegerätes 12 übermittelt. Das erste Steuergerät 23 erhält zudem in Abhängigkeit vom jeweiligen Fahrzeugbetrieb (Leerlauf, Stop and Go-Fahrweise, Geschwindigkeit, Beschleunigung usw.) Informationen vom Luftmassenmesser 5 über die jeweils angesaugte Luftmenge und vom Hauptsteuergerät 8 sowie dem zweiten Steuergerät 36 über den Unterdruck im Ansaugtrakt und weitere Motorbetriebsdaten. Schließlich ist das erste Steuergerät 23 über eine Steuerleitung auch mit dem Drosselventil 34 verbunden, so dass eine an die dem Turbolader bzw. Motorverbrennungsraum aufgrund des jeweiligen Motorbetriebs jeweils zuzuführenden Luftmenge angepasste Gasmenge in den Ansaugtrakt geleitet wird und je Volumeneinheit an angesaugter Luft mittels der Venturidüse 35 immer eine definierte Gasmenge von 0,05 ‰ bis 0,5 ‰, bevorzugt von 0,05 ‰ bis 0,2 ‰ je Liter Ansaugluft in der Luftzufuhrleitung 4 versprüht wird und in den Motorverbrennungsraum 1 gelangt. Unabhängig vom jeweiligen Fahrzeug- und Motorbetrieb ist somit in dem im Motorverbrennungsraum jeweils befindlichen Kraftstoff immer ein bestimmter prozentualer, je Volumeneinheit an angesaugter Verbrennungsluft gleicher Anteil an Brownsgas und damit der als Zündkeime wirkenden energiereichen, gasförmigen Wassermoleküle enthalten.

Die Gaserzeugung im Elektrolysegerät 12 wird somit im Wesentlichen über die Motordrehzahl (Hauptsteuergerät), die Ansaugluftmenge (Luftmengenmesser), die tatsächlich erzeugte Gasmenge (Durchflussmengenmesser) und die pro Ansaugvolumeneinheit festgelegte Gasmenge (Drosselventil) mithilfe der Amplitude und Struktur der erzeugten Stromimpulse gesteuert. Es wird somit nur so viel Gas erzeugt, wie gerade für den jeweiligen Fahrzeug-/Motorbetrieb zur schnellen Zündung und vollständigen Verbrennung des fossilen Kraftstoffs benötigt wird. Das heißt, der prozentuale Brownsgasanteil in einer Ansaugvolumeneinheit ist bewusst gering gehalten und wirkt nicht in herkömmlicher Weise als zusätzlicher Kraftstoff, sondern hat in der geringen Menge lediglich die Funktion eines Additivs. Das heißt, die im Verbrennungsraum gleichmäßig verteilten gasförmigen Wassermoleküle wirken lediglich als.Startkeimlinge oder Zündkeimlinge, die im Verbrennungstakt die Zündung des im Motorverbrennungsraum vorhandenen Kraftstoff-Luft-Gemisches beschleunigen und intensivieren. Die frei werdende Reaktionsenergie zündet an einer Vielzahl von Zündherden explosionsartig den Kraftstoff und sorgt für eine homogene und vollständige Verbrennung des in den Verbrennungsraum eingebrachten Kraftstoffs. Der Kraftstoff wird allein aufgrund der nur als Zündkeimlinge wirkenden gasförmigen Wassermoleküle des Brownsgases effizienter genutzt, so dass die Motorleistung verbessert und der Kraftstoffverbrauch und mithin der Schadstoffausstoß gesenkt werden kann. Darüber wird die Abgastemperatur und damit die Stickoxid- und Kohlendioxid-Emission weiter reduziert. Der für die kontinuierliche Bereitstellung des Brownsgses erforderliche apparative und energetische Aufwand ist wegen der kontrollierten Erzeugung einer nur begrenzten Gasmenge gering.

### Bezugszeichenliste

- 1: Motorverbrennungsraum
- 2: Saugrohr
- 3: Luftfilterkasten
- 4: Luftzufuhrleitung
- 5: Luftmassenmesser
- 6: Turbolader
- 7: Drosselklappe
- 8: Hauptsteuergerät
- 9: Fahrzeugbatterie
- 10: Lichtmaschine
- 11: Sicherung
- 12: Elektrolysegerät
- 13: Gaszufuhrleitung
- 14: Gehäuse v. 12
- 15: Gehäusedecke
- 16: Deckel v. Gasauslassstutzen
- 17: Rohrstück für Schaumstofffilter
- 18: abgesenkter Abschnitt v. 15
- 19: Schraubdeckel v. Elektrolyteinfüllöffnung
- 20: Elektrodenplatten, (20', 20" äußere Elektrodenplatten)
- 21: Verbindungsleitung
- 22: Anschlussklemmen
- 23: erstes Steuergerät
- 24: Gassammelraum, Gasreservoir
- 25: Überdruckventil
- 26: Dichtemesser
- 27: Gasanschlussstutzen
- 28: Füllstandmesser
- 29: Temperatursensor
- 30: Wasserscheider, 30a Wasserdetektör
- 31: Gasfilter
- 32: Durchflussmengenmesser
- 33: Rückbrandsicherung
- 34: Drosselventil
- 35: Venturidüse
- 36: zweites Steuergerät
- 37: Kammern zwischen 20

## Patentansprüche

1. Verfahren zum Betreiben einer Verbrennungskraftmaschine mit einem dem fossilen Kraftstoff im Motorverbrennungsraum mit der Verbrennungsluft zusätzlich zugeführten, durch Elektrolyse von Wasser erzeugten Brownsgas als Mix aus molekularem Wasserstoff und Sauerstoff, sowie Wasserdampf in Gestalt von gasförmigen Wassermolekülen, die zu linearen Wasserisomeren aufgespreizt sind, wobei die entsprechend dem jeweiligen Motorbetrieb in den Ansaugtrakt des Motors gesaugte Luftmenge gemessen wird, und wobei das Elektrolysegerät mit einem pulsierenden Strom betrieben wird,
**dadurch gekennzeichnet, dass**
je Volumeneinheit an jeweils angesaugter Verbrennungsluft immer ein bestimmter prozentualer lediglich als Additiv fungierender begrenzter Anteil an Brownsgas unmittelbar, das heißt ohne Zwischenspeicherung und ohne es durch ein Wasserbad zu leiten, der Verbrennungsluft zugeführt wird, wobei der prozentuale Anteil der im Verbrennungsprozess im Kraftstoff vorhandenen Gasmoleküle derart begrenzt ist, dass die im Kraftstoff-Luft-Gemisch gleichmäßig verteilten energieangereicherten, gasförmigen Wassermoleküle unwesentlich als zusätzlicher Kraftstoff wirken, sondern nur als den Kraftstoff zündende Start- oder Zündkeime für eine früh einsetzende und lang anhaltende intensive und vollständige Verbrennung dienen.

2. Verfahren nach Anspruch 1, **dadurch gekennzeichnet, dass** die am Elektrolysegerät wirkenden Stromimpulse rechteck- oder trapezförmig geformt sind.

3. Verfahren nach Anspruch 1 oder 2, **dadurch gekennzeichnet, dass** die Stromimpulse zur Beeinflussung der Gasausbeute und der Menge an energieangereicherten, gasförmigen Wassermolekülen kontinuierlich oder in Intervallen sowie mit unterschiedlicher Amplitude erzeugt werden.

4. Verfahren nach einem der Ansprüche 1 bis 3, **dadurch gekennzeichnet, dass** die Stromimpulse zur Beeinflussung der Gasausbeute und der Menge an energieangereicherten, gasförmigen Wassermolekülen im Brownsgas einen variablen Flankenanstiegswinkel aufweisen.

5. Verfahren nach einem der Ansprüche 1 bis 4, **dadurch gekennzeichnet, dass** zur Erhöhung der Brownsgasausbeute die Stromimpulse im Abhängigkeit von der Elektrolyttemperatur und -konzentration sowie der Elektrodenplattengeometrie und dem Plattenabstand so gesteuert werden, dass das aus Elektrodenplatten und Elektrolyt bestehende System zur schnellen Ablösung von den Elektrodenplatten und deren Umspülung in Resonanz betrieben wird.

6. Verfahren nach einem der Ansprüche 1 bis 5, **dadurch gekennzeichnet, dass** die Menge des im Elektrolysegerät erzeugten Brownsgases in Abhängigkeit vom jeweiligen Motorbetrieb auf der Grundlage der dem Ansaugtrakt zugeführten, von einem Luftmassenmesser erfassten Luftmenge in Verbindung mit der von einem Durchflussmengenmesser erfassten, vom Elektrolysegerät tatsächlich erzeugten Brownsgasmenge gesteuert wird.

7. Verfahren nach Anspruch 1, **dadurch gekennzeichnet, dass** der Anteil der einem Liter Ansaugluft zugeführten Brownsgasmenge zwischen 0,05 und 0,5 Promille liegt.

8. Anordnung zur Durchführung des Verfahren nach einem der vorangehenden Ansprüche, mit einer ausgehend von einem Luftfilterkasten (3) mit dem Motorverbrennungsraum (1 ) der Verbrennungskraftmaschine verbundenen Luftzufuhrleitung (4) zur Zuführung einer an den jeweiligen Motorbetrieb angepassten Luftmenge, in die eine an ein von einer Fahrzeugbatterie (9) versorgtes Elektrolysegerät (12) angeschlossene Gaszufuhrleitung (13) mündet, **dadurch gekennzeichnet, dass** in die Luftzufuhrleitung (4) vor der Mündung der Gaszufuhrleitung (13) ein Luftmassenmesser (5) zur Erfassung des in Abhängigkeit vom jeweiligen Motorbetrieb angesaugten Luftvolumens und in die Gaszufuhrleitung (13) in Strömungsrichtung zunächst ein Durchflussmengenmesser (32) zur Erfassung der tatsächlich erzeugten Gasmenge und ein Drosselventil (34) zur endgültigen Einstellung des an die geförderte Luftmenge angepassten Gasvolumens eingebunden sind, die jeweils an ein dem Elektrolysegerät (12) zugeordnetes erstes Steuergerät (23) zur Regelung der Gaserzeugung auf der Grundlage der angesaugten Luftmenge und der erfassten Gasmenge mithilfe eines von einem Modulator kontinuierlich oder in Intervallen umgeformten, in Frequenz, Amplitude, Flankenwinkel und Zeitdauer variablen pulsierenden Stroms angeschlossen sind.

9. Anordnung nach Anspruch 8, **dadurch gekennzeichnet, dass** in die Gaszufuhrleitung (13) ein Wasserscheider (30), ein Wasserdetektor (30a) und ein Gasfilter (31) zur Gasreinigung und eine aus einem gasdurchlässigen keramischen Material bestehende Rückbrandsicherung (33) zur Vermeidung eines Flammenrückschlags in das Elektrolysegerät (12) eingebunden sind.

10. Anordnung nach Anspruch 8, **dadurch gekennzeichnet, dass** das erste Steuergerät (23) über ein zweites Steuergerät (36) mit einem der Verbrennungskraftmaschine zugeordneten Hauptsteuergerät (8) verbunden ist.

11. Anordnung nach Anspruch 8, **dadurch gekennzeichnet, dass** die Gaszufuhrleitung (13) zur Verwirbelung und gleichmäßigen Verteilung der im Gasstrom enthaltenen Moleküle in der Ansaugluft über eine stromab des Luftmassenmessers (5) angeordnete Venturidüse (35) in die Luftzufuhrleitung (4) mündet, und dass das Elektrolysegerät (12) mehrere in einem mit einem Elektrolyt gefüllten Gehäuse (14) im Abstand parallel angeordnete, mit Durchbrüchen versehene Elektrodenplatten (20, 20', 20") aufweist, und die beiden äußeren Elektroden- platten (20', 20")oder eine mittige Elektrodenplatte (20") und die beiden äußeren Elektrodenplatten (20') über das erste Steuergerät (23) mit dem Plus- bzw. Minuspol der Fahrzeugbatterie (9) verbunden sind, wobei ein oberhalb der Elektrodenplatten (20, 20', 20") durch eine Gehäusedecke (15) begrenzter Gassammelraum (24) über einen auf einen Gasauslass- stutzen abdichtend aufsteckbaren und bei einem bestimmten Überdruck im Gassammelraum (24) selbsttätig öffnenden Deckel (16) mit einem innen liegenden, einen Filter aufnehmenden Rohrstück (17) und einem Gasanschlussstutzen (27) an die Gaszufuhrleitung (13) anschließbar ist.

12. Anordnung nach Anspruch 11, **dadurch gekennzeichnet, dass** die Gehäusedecke (15) einen bis auf die maximale Elektrolytfüllhöhe im Gehäuse (14) abgesenkten Abschnitt (18) mit einer durch einen Schraubdeckel (19) verschließbaren Einfüllöffnung aufweist.

13. Anordnung nach Anspruch 11, **dadurch gekennzeichnet, dass** die Elektrodenplatten (20) in am Boden und zwei gegenüberliegenden Seitenwänden des Gehäuses (14) sowie im Bereich der Plattenoberkante vorgesehenen Nuten fixiert sind, und dass das Elektrolysegerät (12) zur Überwachung des Elektrolyten einen Dichtemesser (26), einen Füllstandsmesser (28) und einen Temperatursensor (29) sowie ein Überdruckventil (25) aufweist.

14. Anordnung nach Anspruch 11, **dadurch gekennzeichnet, dass** die Elektrodenplatten (20) eine gegenüber ihrer Höhe deutlich größere Breite aufweisen und dadurch über einen langen Zeitraum eine ausreichend große Elektrodenfläche mit Elektrolyt bedeckt ist, und dass die Elektrodenplattendicke etwa einen Millimeter beträgt und der Elektrodenplattenabstand zwischen 1 ,5 und 10,5 Millimetern liegt.

15. Anordnung nach Anspruch 11, **dadurch gekennzeichnet, dass** der im Elektrolysegerät (12) befindliche Elektrolyt eine 3,5 bis 5,0-prozentige Kalilaugelösung ist, und dass der Elektrolyt bevorzugt zur Gefrierpunktabsenkung im Winterbetrieb eine erhöhte Konzentration aufweist und/oder als Gefrierschutzmittel bis max. 10% Ethylenglycol enthält.

## Claims

1. Method for operating an internal combustion engine with a Brown's gas, additionally supplied to the fossil fuel in the engine combustion chamber with the combustion air and produced by electrolysis of water, as a mixture of molecular hydrogen and oxygen, as well as water vapour in the form of gaseous water molecules which are spread apart to form linear water isomers, wherein the quantity of air drawn into the intake tract of the engine in accordance with the respective engine operating mode is measured, and wherein the electrolyzer is operated using a pulsed current,
**characterized in that**,
per unit of volume of combustion air respectively drawn in, a certain limited percentage of Brown's gas acting only as an additive is always supplied directly, i.e. without temporary storage and without passing it through a water bath, to the combustion air, wherein the percentage of the gas molecules present in the fuel during the combustion process is limited such that the energy-enriched, gaseous water molecules evenly distributed in the fuel-air mixture marginally act as an additional fuel, but are only used as start or ignition nuclei igniting the fuel for early and long-lasting intensive and complete combustion.

2. Method according to claim 1, **characterized in that** the current pulses acting on the electrolyzer are formed rectangular or trapezoidal.

3. Method according to claim 1 or 2, **characterized in that** the current pulses for influencing the gas yield and the quantity of energy-enriched, gaseous water molecules are generated continuously or at intervals and with different amplitudes.

4. Method according to one of claims 1 to 3, **characterized in that** the current pulses for influencing the gas yield and the quantity of energy-enriched, gaseous water molecules in the Brown's gas have a variable slope angle.

5. Method according to one of claims 1 to 4, **characterized in that**, in order to increase the Brown's gas yield, the current pulses are controlled depending on the electrolyte temperature and concentration as well as on the electrode plate geometry and the plate spacing such that the system consisting of electrode plates and electrolyte is operated in resonance so that the electrode plates can be quickly separated and the electrolyte can be washed therearound.

6. Method according to one of claims 1 to 5, **characterized in that** the quantity of Brown's gas produced in the electrolyzer is controlled depending on the respective engine operating mode on the basis of the quantity of air supplied to the intake tract and detected by an air-flow meter in conjunction with the quantity of Brown's gas detected by a flowmeter and actually produced by the electrolyzer.

7. Method according to claim 1, **characterized in that** the proportion of the quantity of Brown's gas supplied to one litre of intake air is between 0.05 and 0.5 per thousand.

8. Arrangement for carrying out the method according to one of the preceding claims, with an air supply line (4) connected, starting from an air filter box (3), to the engine combustion chamber (1) of the internal combustion engine for supplying a quantity of air, adapted to the respective engine operating mode, into which a gas supply line (13) connected to an electrolyzer (12) supplied with power by a vehicle battery (9) opens, **characterized in that** an air-flow meter (5) for detecting the volume of air drawn in depending on the respective engine operating mode is integrated in the air supply line (4) before the gas supply line (13) opens into it and, in the direction of flow, first a flowmeter (32) for detecting the quantity of gas actually produced and a throttle valve (34) for ultimately setting the volume of gas adapted to the quantity of air conveyed are integrated in the gas supply line (13), and these are connected in each case to a first control device (23) assigned to the electrolyzer (12) for regulating the production of gas on the basis of the quantity of air drawn in and the quantity of gas detected by means of a pulsed current that is transformed continuously or at intervals by a modulator and has variable frequency, amplitude, flank angle and duration.

9. Arrangement according to claim 8, **characterized in that** a water separator (30), a water detector (30a) and a gas filter (31) for gas cleaning and a burnback arrestor (33) consisting of a gas-permeable ceramic material for preventing a flashback into the electrolyzer (12) are integrated in the gas supply line (13).

10. Arrangement according to claim 8, **characterized in that** the first control device (23) is connected to a main control device (8) assigned to the internal combustion engine via a second control device (36).

11. Arrangement according to claim 8, **characterized in that** the gas supply line (13) opens into the air supply line (4) in order to swirl and evenly distribute the molecules contained in the gas flow in the intake air via a Venturi nozzle (35) arranged downstream of the air-flow meter (5), and **in that** the electrolyzer (12) has several electrode plates (20, 20', 20") arranged in parallel and spaced apart in a housing (14) filled with an electrolyte and provided with apertures, and the two outer electrode plates (20', 20") or one central electrode plate (20") and the two outer electrode plates (20') are connected to the positive or negative pole of the vehicle battery (9) via the first control device (23), wherein a gas collecting chamber (24) delimited above the electrode plates (20, 20', 20") by a housing cover (15) can be connected to the gas supply line (13) via a cap (16), which can be placed on a gas outlet connecting piece in a sealing manner and which opens automatically when there is a certain amount of overpressure in the gas collecting chamber (24), with an internal tube piece (17), accommodating a filter, and a gas connecting piece (27).

12. Arrangement according to claim 11, **characterized in that** the housing cover (15) has a portion (18) lowered to the maximum electrolyte fill level in the housing (14) with a filling opening that can be sealed by a screw cap (19).

13. Arrangement according to claim 11, **characterized in that** the electrode plates (20) are fixed in grooves made in the base and in two opposite side walls of the housing (14), as well as in the region of the upper edge of the plates, and **in that** the electrolyzer (12) has a densimeter (26), a fill level measuring device (28) and a temperature sensor (29), as well as a pressure-relief valve (25), for monitoring the electrolyte.

14. Arrangement according to claim 11, **characterized in that** the electrode plates (20) have a width much greater than their height, and a sufficiently large electrode surface area is thereby covered with electrolyte for a long period of time, and **in that** the electrode plate thickness is approximately one millimetre and the electrode plate spacing is between 1.5 and 10.5 millimetres.

15. Arrangement according to claim 11, **characterized in that** the electrolyte located in the electrolyzer (12) is a 3.5 to 5.0 per cent caustic potash solution, and **in that** the electrolyte preferably has a higher concentration in order to lower the freezing point during winter operation and/or contains up to a maximum of 10% ethylene glycol as an antifreezing agent.

## Revendications

1. Procédé permettant de faire fonctionner un moteur à combustion interne au moyen d'un gaz de Brown produit par électrolyse de l'eau, délivré au carburant fossile se trouvant dans la chambre à combustion du moteur en sus de l'air de combustion et prenant la forme d'un mélange d'hydrogène moléculaire et d'oxygène, ainsi que de vapeur d'eau sous la forme de molécules d'eau sous forme gazeuse qui sont pulvérisées pour former des isomères d'eau linéaires, la quantité d'air aspirée en fonction du mode de fonctionnement respectif du moteur dans le conduit d'admission du moteur étant mesurée et l'appareil d'électrolyse étant entraîné avec un courant pulsé ;
**caractérisé en ce que** :
pour chaque unité de volume d'air de combustion respectivement aspiré, on a toujours une teneur de gaz de Brown limitée en pourcentage servant seulement d'additif et amenée directement, c'est-à-dire sans stockage intermédiaire et sans traversée préalable de bain-marie qui est délivrée à l'air de combustion, la teneur en pourcentage de molécules gazeuses présentes dans le carburant au cours du processus de combustion étant limitée de telle sorte que les molécules d'eau sous forme gazeuse enrichies en énergie et régulièrement réparties dans le mélange air-carburant agissent de façon non essentielle comme un carburant supplémentaire et ne servent que de germes de démarrage ou d'allumage enflammant le carburant pour une combustion entière, intensive, précoce et durant longtemps.

2. Procédé selon la revendication 1, **caractérisé en ce que** les impulsions de courant agissant au niveau de l'appareil d'électrolyse prennent une forme rectangulaire ou trapézoïdale.

3. Procédé selon la revendication 1 ou 2, **caractérisé en ce que** les impulsions de courant sont produites en continu ou à intervalles donnés ainsi qu'avec différentes amplitudes pour influencer le rendement en gaz et la quantité de molécules d'eau sous forme gazeuse enrichies en énergie.

4. Procédé selon l'une quelconque des revendications 1 à 3, **caractérisé en ce que** les impulsions de courant présentent un angle variable de croissance d'impulsion pour influencer le rendement en gaz et la quantité de molécules d'eau sous forme gazeuse enrichies en énergie dans le gaz de Brown.

5. Procédé selon l'une quelconque des revendications 1 à 4, **caractérisé en ce que** pour augmenter le rendement du gaz de Brown, les impulsions de courant sont commandées de telle sorte en fonction de la température et de la concentration de l'électrolyte ainsi que de la forme géométrique des plaques d'électrode et de la distance entre les plaques que le système composé des plaques d'électrode et de l'électrolyte est entraîné en résonnance pour une dissolution rapide des plaques d'électrode et leur rinçage.

6. Procédé selon l'une quelconque des revendications 1 à 5, **caractérisé en ce que** la quantité de gaz de Brown produite dans l'appareil d'électrolyse est délivrée en fonction du mode de fonctionnement respectif du moteur sur la base de la quantité d'air amenée au conduit d'admission et déterminée par un système de mesure de masse d'air en relation avec la quantité de gaz de Brown déterminée par le système de mesure de débit et effectivement produite par l'appareil d'électrolyse.

7. Procédé selon la revendication 1, **caractérisé en ce que** la teneur de la quantité de gaz de Brown amenée par litre d'air aspiré est comprise entre 0,05 et 0,5 pour mille.

8. Agencement servant à mettre en œuvre le procédé selon l'une quelconque des revendications précédentes, avec une conduite d'alimentation en air (4) partant du caisson de filtre à air (3) et reliée à la chambre à combustion du moteur (1) du moteur à combustion interne pour délivrer une quantité d'air adaptée au mode de fonctionnement respectif du moteur et dans laquelle débouche une conduite d'alimentation en gaz (13) raccordée à un appareil d'électrolyse (12) alimenté par une batterie de véhicule (9), **caractérisé en ce qu'**un système de mesure de masse d'air (5) est raccordé dans la conduite d'alimentation en air (4) et devant l'embouchure de la conduite d'alimentation en gaz (13) pour la détection du volume d'air aspiré en fonction du mode de fonctionnement respectif du moteur et qu'un système de mesure de débit (32) est d'abord raccordé dans la conduite d'alimentation en gaz (13) dans la direction d'écoulement pour la détection de la quantité effective de gaz produite et qu'une soupape d'étranglement (34) est raccordée pour le réglage définitif du volume de gaz adapté à la quantité d'air transportée, ces éléments étant respectivement raccordés à un premier appareil de commande (23) associé à l'appareil d'électrolyse (12) pour le réglage de la production de gaz sur la base de la quantité d'air aspirée et de la quantité de gaz détectée à l'aide d'un courant pulsé converti en continu ou par intervalles par un modulateur et variable en fréquence, en amplitude, en angle de flanc et en durée.

9. Agencement selon la revendication 8, **caractérisé en ce qu'**une cloison s'opposant à l'intrusion d'eau (30), un détecteur d'eau (30a) et un filtre à gaz (31) sont raccordés dans la conduite d'alimentation en gaz (13) pour le nettoyage du gaz et qu'une sécurité coupe-feu composée d'une matière céramique perméable aux gaz (33) est raccordée afin d'éviter un recul de flammes jusque dans l'appareil d'électrolyse (12).

10. Agencement selon la revendication 8, **caractérisé en ce que** le premier appareil de commande (23) est relié à un appareil de commande principal (8) associé au moteur à combustion interne via un deuxième appareil de commande (36) .

11. Agencement selon la revendication 8, **caractérisé en ce que** la conduite d'alimentation en gaz (13) débouche, pour le tourbillonnement et la répartition régulière des molécules contenues dans le flux de gaz contenu, dans l'air aspiré via une buse de Venturi (35) disposée en aval du système de mesure de masse d'air (5), dans la conduite d'alimentation en air (4), et que l'appareil d'électrolyse (12) comporte plusieurs plaques d'électrode (20, 20', 20") prévues parallèlement à une certaine distance dans un carter (14) rempli d'un électrolyte, avec des passages traversants, et que les deux plaques d'électrode extérieures (20', 20") ou une plaque d'électrode centrale (20") et les deux plaques d'électrode extérieures (20') sont reliées au pôle plus et/ou moins de la batterie de véhicule (9) via le premier appareil de commande (23), une chambre de collecte de gaz (24) délimitée au-dessus des plaques d'électrode (20, 20', 20") par un cache de carter (15) pouvant être raccordée à la conduite d'alimentation en gaz avec une partie de tube (17) située à l'intérieur et contenant un filtre et avec un manchon de raccordement de gaz (27) (13) via un couvercle (16) s'ouvrant automatiquement de façon enfichée de façon étanche sur une tubulure d'évacuation de gaz et s'ouvrant en cas de surpression définie dans la chambre de collecte de gaz (24) .

12. Agencement selon la revendication 11, **caractérisé en ce que** le cache de carter (15) comporte une section (18) abaissée jusqu'à la hauteur maximale de remplissage d'électrolyte dans le carter (14) avec une ouverture de remplissage pouvant être refermée par un couvercle vissé (19) .

13. Agencement selon la revendication 11, **caractérisé en ce que** les plaques d'électrode (20) sont fixées dans des rainures prévues au niveau du fond et de deux parois latérales opposées du carter (14) ainsi dans la région du bord supérieur de plaque et que l'appareil d'électrolyse (12) présente un densimètre (26), un système de mesure d'état de remplissage (28) et un capteur de température (29) ainsi qu'une soupape de surpression (25) pour la surveillance de l'électrolyte.

14. Agencement selon la revendication 11, **caractérisé en ce que** les plaques d'électrode (20) présentent une largeur significativement plus grande que leur hauteur et **caractérisé en ce que** sur un laps de temps plus long, une surface d'électrode suffisamment grande est recouverte d'électrolyte et que l'épaisseur des plaques d'électrode est approximativement d'un millimètre et que la distance entre les plaques d'électrode est comprise entre 1,5 et 10,5 millimètres.

15. Agencement selon la revendication 11, **caractérisé en ce que** l'électrolyte se trouvant dans l'appareil d'électrolyse (12) est une solution d'hydroxyde de potassium de 3,5 à 5,0 pour cent et que l'électrolyte contient de façon préférée une concentration accrue et/ou comme protection antigel tout au plus 10 % d'éthylène glycol pour abaisser le point de gel en fonctionnement en hiver.
